(19) Europäisches Patentamt
European Patent Office
Office européen des brevets

(11) **EP 3 068 029 A1**

(12) **EUROPEAN PATENT APPLICATION**

(43) Date of publication:
**14.09.2016 Bulletin 2016/37**

(51) Int Cl.:
*H02M 7/487* (2007.01)  *H02M 1/32* (2007.01)
*H02M 7/483* (2007.01)

(21) Application number: **16158904.9**

(22) Date of filing: **07.03.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.03.2015  KR 20150033017**

(71) Applicant: **LSIS Co., Ltd.**
**Anyang-si, Gyeonggi-do 431-848 (KR)**

(72) Inventors:
• **Choi, Seung Cheol**
**430-804 Gyeonggi-do (KR)**
• **Yoo, Anno**
**431-831 Gyeonggi-do (KR)**

(74) Representative: **Groth & Co. KB**
**P.O. Box 6107**
**102 32 Stockholm (SE)**

(54) **INVERTER SYSTEM**

(57)    An inverter system is provided. In the inverter system according to the present disclosure, adjacently arranged four switching elements among U phase and V phase switching elements configured in an NPC/H bridge manner are converted to an ON state to bypass a voltage applied from a DC link capacitor,

**FIG. 4**

**Description**

TECHNICAL FIELD

The teachings in accordance with the exemplary embodiments of this present disclosure generally relate to an inverter system.

BACKGROUND

In general, a medium voltage inverter means an inverter having an input power whose rms (root mean square) value is over 600V for a line-to-line voltage with a rated power capacity generally ranging from several kW to several MW capacities, and generally used to drive an industrial load of large inertia of, for a non-limiting example, fans, pumps and compressors.

One form of medium voltage inverter may be largely a cascaded multilevel series-connected inverter generating an output phase voltage of more than 3-level. In the cascaded multilevel series-connected inverter, an output voltage level and the number of cells are determined by the number of power cells comprising the multilevel inverter, and each cell uses an insulated input voltage.

Each phase is formed by serially connecting a plurality of power cells in the cascaded multilevel series-connected inverter, and a 3-phase inverter output voltage is determined by a sum of output voltages of each power cell forming each phase. Each power cell may be configured by various topologies.

As discussed above, a modularized structure of a multilevel inverter using power cells is advantageous in that maintenance and repair are easy, and a bypass operation with reduced output is possible even if any one of the power cells is out of order. During a bypass operation, an output of a defected power cell is short-circuited through a bypass switch to allow bypassing the defected power cell, while the remaining normally operating power cells are used to enable a medium voltage inverter to continuously operate.

However, when no bypass switch is used on an output terminal of the defected power cell, a DC-link voltage is increased by a rectifying operation due to inverse parallel diode of a power switch used by the defected power cell, resulting in generation of excessive rated voltage at a DC-link capacitor, whereby an entire operation of inverter may be disadvantageously rendered to be impossible due to power cells being damaged

SUMMARY

The technical subject to be solved by the present disclosure is to provide an inverter system configured to enable a bypass through switching of an inverter unit free from a separate bypass switch.

In one general aspect of the present disclosure, there is provided an inverter system forming a phase voltage of a motor by serially connecting a plurality of power cells, each power cell including:

> a rectifying unit configured to rectify an applied AC voltage to a DC voltage;
> a DC link capacitor;
> an inverter unit including first to fourth switching elements, each serially connected to form a U phase; and fifth to eighth switching elements serially connected to form a V phase, wherein the switching elements are arranged in an NPC (Neutral Point Clamped)/H bridge by a plurality of diodes to synthesize a DC link voltage of the DC link capacitor to an AC voltage having a predetermined voltage and frequency by ON or OFF of each of the plurality of switching elements; and
> a controller configured to bypass an output voltage of the inverter unit by controlling the ON or OFF of the plurality of switching elements.

In some exemplary embodiments, the controller may bypass an output voltage applied from the DC link capacitor by turning on the first, second, fifth and sixth switching elements.

In some exemplary embodiments, the controller may bypass an output voltage applied from the DC link capacitor by turning on the second, third, sixth and seventh switching elements.

In some exemplary embodiments, the controller may bypass an output voltage applied from the DC link capacitor by turning on the third, fourth, seventh and eighth switching elements.

In some exemplary embodiments, the controller may convert some of the plurality of switching elements to ON state in order to carry out a bypass operation in response to a fault-generated switching element by ascertaining a state of the plurality of switching elements when it is determined that a fault is generated on the power cell.

In some exemplary embodiments, the controller may bypass an output voltage applied from the DC link capacitor by turning on the first, second, fifth and sixth switching elements when a fault is generated on any one of the third, fourth, seventh and eighth switching elements.

In some exemplary embodiments, the controller may bypass an output voltage applied from the DC link capacitor by turning on the second, third, sixth and seventh switching elements when a fault is generated on any one of the first, fourth, fifth and eighth switching elements.

In some exemplary embodiments, the controller may bypass an output voltage applied from the DC link capacitor by turning on the third, fourth, seventh and eighth switching elements when a fault is generated on any one of the first, second, fifth and sixth switching elements.

## ADVANTAGEOUS EFFECTS

The present disclosure has an advantageous effect in that switching operations of switching elements in an inverter unit can be controlled to allow a current to bypass, whereby a manufacturing cost can be reduced because of no use of additional switch, when a cell controller determines that a power cell is developed with a fault.

## BRIEF DESCRIPTION OF DRAWINGS

FIG. 1 is a schematic view illustrating a medium voltage inverter according to an exemplary embodiment of the present disclosure.

FIG. 2 is a schematic block diagram illustrating power cells according to prior art.

FIG. 3 is a schematic view illustrating waveforms of an output voltage in an inverter unit of FIG. 2.

FIG. 4 is a detailed block diagram illustrating power cells of an inverter system according to an exemplary embodiment of the present disclosure.

FIGS. 5, 6 and 7 are schematic views illustrating a path of an output current for each mode of Table 2.

FIG. 8 is a flowchart illustrating to explain the performance of bypass operation by determining, by a cell controller of the present disclosure, a bypass mode.

## DETAILED DESCRIPTION

Various exemplary embodiments will be described more fully hereinafter with reference to the accompanying drawings, in which some exemplary embodiments are shown. The present inventive concept may, however, be embodied in many different forms and should not be construed as limited to the example embodiments set forth herein. Rather, the described aspect is intended to embrace all such alterations, modifications, and variations that fall within the scope and novel idea of the present disclosure.

Hereinafter, exemplary embodiments of the present disclosure will be described in detail with reference to the accompanying drawings.

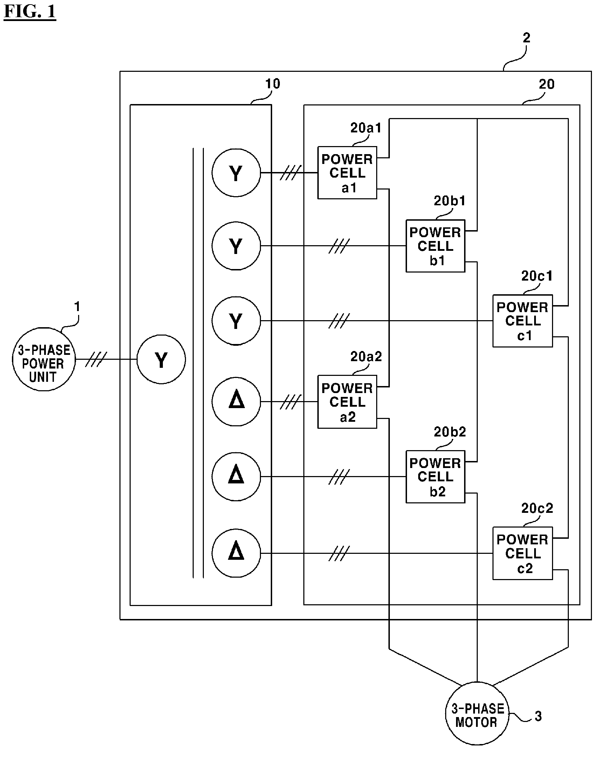

FIG. 1 is a schematic view illustrating a serially-connected medium voltage inverter according to an exemplary embodiment of the present disclosure.

Referring to FIG. 1, in a system applied for the present disclosure, an inverter (2) converts a 3-phase input power whose rms (root mean square) value is over 600V for a line-to-line voltage and supplies the converted power to a medium voltage 3-phase motor. At this time, the 3-phase motor may be an induction machine or a synchronous machine. However, the 3-phase motor may be other motors than the induction machine or the synchronous machine.

The inverter (2) according to the present disclosure may include a phase shift transformer (10) and a plurality of power cells (20).

The phase shift transformer (10) may insulate a power inputted form a power unit (1), and convert a phase and size of the voltage in response to demand from the plurality of power cells and provide the voltage to the plurality of power cells (20). A THD (Total Harmonic Distortion) of an input current can be enhanced by the phase shift.

The plurality of power cells (20) may receive an output voltage of the phase shift transformer (10), and the output voltage of the medium voltage inverter (2) may be synthesized by a sum of outputs of power cells corresponding to each phase.

That is, as illustrated in FIG. 1, an output voltage of a phase in the inverter (2) is a sum of output voltages of a serially-connected power cells ((20a1 and 20a2), an output voltage of b phase is a sum of output voltages of serially-connected power cells (20b1 and 20b2), and an output voltage of c phase is a sum of output voltages of serially-connected power cells (20c1 and 20c2). However, although an example of two power cells being serially connected has been illustrated for simplicity of explanation, the present disclosure is not limited thereto, the number of serially-connected power cells may be determined by an output voltage of the inverter (2). The plurality of power cells are formed in the same configuration, and reference numeral of power cells will be designated as '20' in the following description of the present disclosure.

Although size of each synthesized output phase voltage of inverter (2) is same, there is a 120°phase difference between each output phase voltage. Furthermore, it should be apparent to the skilled in the art that THD of output voltage applied to the motor (3) and voltage change rate (dv/dt) can be improved by the increased number of power cells (20) forming the inverter (2) and various switching methods.

Hereinafter, configuration of power cells having a conventional bypass switch will be first explained, and then configuration of power cells according to the present disclosure will be described.

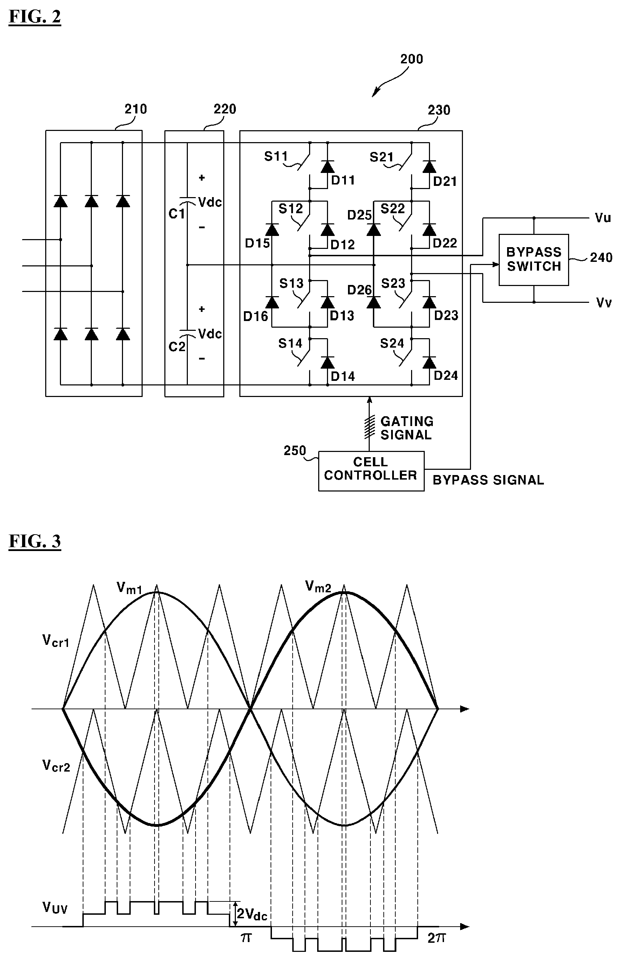

FIG. 2 is a schematic block diagram illustrating power cells according to prior art.

Referring to FIG. 2, a power cell (200) according to prior art includes a rectifying unit (210), a DC link capacitor (220), an inverter unit (230), a bypass switch (240) and a cell controller (250).

The rectifying unit (210) is comprised of six diodes. Size of rectified DC link voltage is determined by a relation of a difference between an input power of the rectifying unit (210) and an output power of the power cell (200). A DC link voltage increases when a supplied input power is greater than a load-consumed output power, and a DC link voltage decreases in the reverse case. The DC link capacitor (220) is designed to solve an instantaneous power imbalance at input/output links.

The inverter unit (230) is a mixture of NPC (Neutral-Point Clamped) method and an H-bridge method, where output voltages can be synthesized by turning on and turning off a plurality of switching elements from the DC link voltage.

The cell controller (250) is independently arranged at each power cell and generates a gating signal that determines a switching state of a plurality of switching elements of the inverter unit (230). The bypass switch (240) serves to bypass an output voltage of the power cell (200) in response to control of the cell controller (250).

When a fault is generated in the power cell (200) thus configured, the cell controller (250) transmits a fault signal to a master controller, transmits a bypass signal to the bypass switch (240) and short-circuits an output of a relevant power cell (200), such that no influence is exercised on operation of the motor (3), and a continued operation of inverter can be carried out using the normally operating power cells.

An output voltage of power cell (200) in FIG. 2 may be determined by a voltage difference between Vu and Vv according to the following Equation 1.

【Equation 1】

$$V_{uv} = V_u - V_v$$

where, Vuv is an output voltage of power cell, and Vu and Vv represent pole voltages. S11 and S13 in U phase switch, and S 12 and S14 perform a complementary switching operation of being alternately turned on and turned off, and likewise, S21 and S23 in V phase switch and S22 and S24 perform a complementary switching operation of being alternately turned on and turned off. A pole voltage and an output voltage of power cell (200) may be defined in response to switching state as shown in Table 1.

[Table 1]

| Switching state (U phase) | Pole voltage (Vu) | Switching state (V phase) | Pole voltage (Vv) |
|---|---|---|---|
| S11, S12 - ON | Vdc | S21, S22 - ON | Vdc |
| S12, S13 - ON | 0 | S22, S23 - ON | 0 |
| S13, S14 - ON | -Vdc | S23, S24 - ON | -Vdc |

FIG. 3 is a schematic view illustrating waveforms of an output voltage in an inverter unit of FIG.2, which is an example of using an IPD (In-Phase Disposition) modulation.

Command voltages Vm1 and Vm2 at two poles of a power cell (200) are same in frequency and size, and have a 180°phase difference. Although carrier waves Vcr1 and Vcr2 are same in frequency and size, offsets are different. Vcr1, when compared with pole voltage commands Vm1 and Vm2, generates gating signals of (S11, S 13) and (S21, S23), and Vcr2 generates gating signals of (S12, S14) and (S22, S24), when compared with pole voltage commands Vm1 and Vm2.

Although an NPC/H bridge inverter of inverter unit (230) in FIG. 3 uses a 3-level pole voltage as in Table 1, it outputs a 5-level voltage through Table 1. Each voltage level is same as that of Vdc.

The bypass switch (240) is turned on during a bypass operation to short-circuit the output terminals Vu and Vv of the power cell (200). Because the output terminal is short-circuited, 0 is outputted at all times regardless of switching state of Table 1, and the cell controller (250) turns off all switches of power cells (200) in order to prevent arm short-circuit.

However, problems arise of increased volume and cost for product, because a separate bypass switch is required for each power cell forming a medium voltage inverter in order to realize the bypass function in the conventional inverter system.

Thus, the bypass is realized by controlling the switching of switching elements in the inverter unit (23) without recourse to use of a separate bypass switch on the power cell according to the exemplary embodiment of the present disclosure.

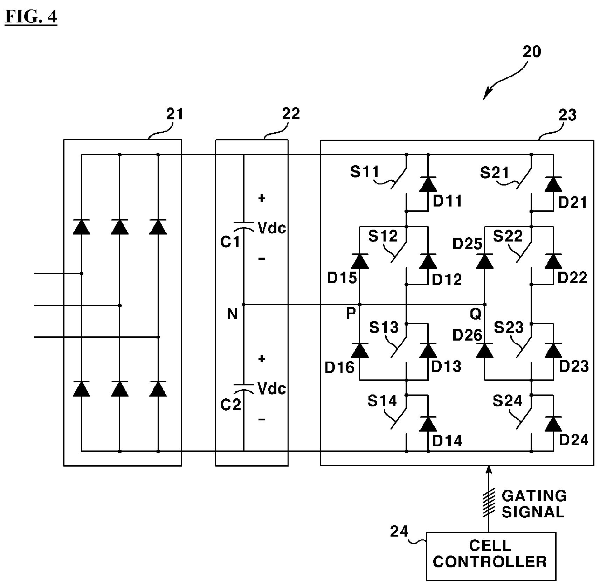

FIG. 4 is a detailed block diagram illustrating power cells of an inverter system according to an exemplary embodiment of the present disclosure.

Referring to FIG. 4, the power cell (20) according to the present disclosure may include a rectifying unit (21), a DC link capacitor (22), n inverter unit (23) and a cell controller (24).

The rectifying unit (21) may be comprised of 6 diodes to rectify AC voltages respectively inputted from a phase shift transformer (10) to a DC. Size of the rectified DC link voltage may be determined by a relation of a difference between an input power of the rectifying unit (21) and an output power of power cell (20). W hen an input power supplied from the phase shift transformer (10) is greater than an output power consumed by a load, a DC link voltage may increase, but the DC link voltage may decrease in a reverse case.

The DC link capacitor (22) may solve the instantaneous power imbalance of input/output terminals. Furthermore, the DC link capacitor (22) may be connected in series by first and second capacitors (C1, C2), where a voltage applied to each capacitor (C1, C2) corresponds to a DC link voltage. However, this configuration is exemplary, and the DC link capacitor may be configured by being connected by an increased number of capacitors.

The inverter unit (23) is a mixture of an NPC method and an H-bridged method, where output voltages may be synthesized by turning on and turning off a plurality of switching elements from DC link voltages of DC link capacitor (22).

To be more specific, the inverter unit (23) according to an exemplary embodiment of the present disclosure is configured in a manner such that a first switching element (S11) to a fourth switching element (S 14) may be serially connected, and a fifth switching element (S21) to eighth switching element (24) may be serially arranged. At this time, the first to fourth switching elements (S11 to S 14) are defined as a U phase switching element, and the fifth to eighth switching elements (S21 to S24) are defined as a V phase switching element.

First to eighth diodes (D11 to D14, and D21 to D24) may be respectively connected in parallel to the switching elements. Furthermore ninth and tenth diodes (D 15, D16) may be serially connected to be connected in parallel to the connection between the second and third switching elements (S12, S 13), and a node (P) therebetween may be connected to a node (N) between the first and second capacitors (C1, C2). Furthermore, eleventh and twelfth diodes (D25, D26) are serially connected, and connected to a connection between sixth and seventh switching elements (S22, S24), and a node (Q) therebetween may be connected to a node (N) between the first and second capacitors (C1, C2). That is, the node (N) between the first and second capacitors (C1, C2)), a node (P) between the ninth and tenth diodes (D 15, D16) and a node (Q) between the eleventh and twelfth diodes (D25, D26) may be respectively connected, which is called an NPC method.

The cell controller (24) may be independently arranged for each power cell (20), and may generate a gating signal determining a switching state of a plurality of switching elements (23).

Although the bypass switch (240) is conventionally arranged at an output terminal of the power cell (200) and an output voltage is made 0 at all times by short-circuiting the bypass switch, and a path of a motor current is formed to carry out the bypass operation, the cell controller (24) according to the present disclosure may output 0 voltage regardless of load current state to form a path of a motor current.

A switching state of a power cell outputting 0 at all times may be defined by the following Table 2.

[Table 2]

| Mode | Switching state (U phase) | Pole voltage (Vu) | Switching state (V phase) | Pole voltage (Vv) | Output voltage (Vuv=Vu-Vv) |
|---|---|---|---|---|---|
| 1 | S11, S12 - ON | Vdc | S21, S22 - ON | Vdc | 0 |
| 2 | S12, S13 - ON | 0 | S22, S23 - ON | 0 | 0 |
| 3 | S13, S14 - ON | -Vdc | S23, S24 - ON | -Vdc | 0 |

That is, the cell controller (24) changes adjacently arranged four switching elements among U phase and V phase switching elements to an ON state in an inverter unit (23) in which a plurality of switching elements and a plurality of diodes are arranged in an NPC/H bridge method.

To be more specific, two U phase switching elements and two V phase switching elements are changed to ON state, and at this time, the ON state changed U phase and V phase switching elements are arranged at respectively corresponding positions.

For example, when the first and second switching elements (S11, S12) in U phase are in ON state, and when V phase fifth and sixth switching elements (S21, S22) are in ON state, an output voltage may be 0, whereby a bypass can be formed.

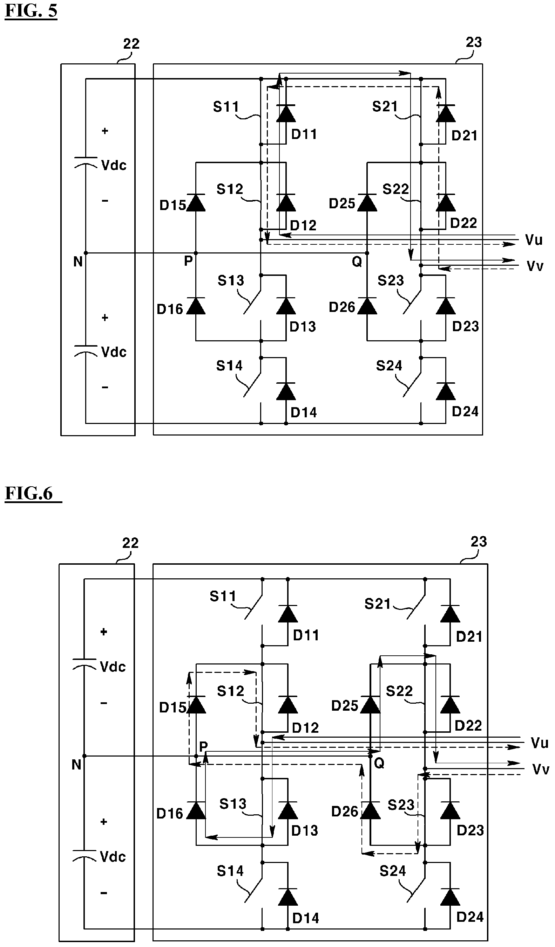

FIGS. 5, 6 and 7 are schematic views illustrating a path of an output current for each mode of Table 2, where FIG 5 corresponds to a mode 1 of Table 2, in which the first, second, fifth and sixth switching elements (S11, S12, S21 및 S22) are made in ON state to perform a bypass operation.

A current can be bypassed by forming a close circuit along a path of D12→D11→S21→S22 when the current is in a positive (+) direction, which is illustrated in a solid line. Conversely, a current can be bypassed by forming a close circuit along a path of D22→D21→S11→S12 when the current is in a negative (-) direction, which is illustrated in a dotted line.

FIG. 6 corresponds to mode 2 of Table 2, where the second, third, sixth and seventh switching elements (S12, S 13, S22 및 S23) are made in ON state to carry out a bypass operation.

A current may be bypassed along a path of S13→D16→D25→S22 when the current is in a positive direction, which is illustrated in a solid line. Conversely, a current may be bypassed along a path of S23→D26→D15→S12 when the current is in a negative direction, which is illustrated in a dotted line.

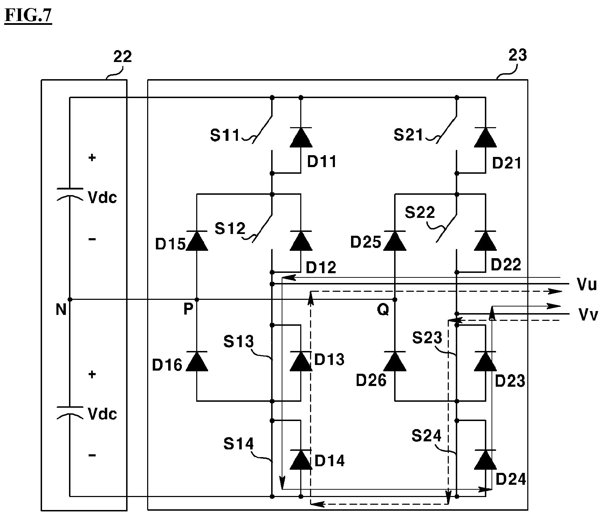

Furthermore, FIG. 7 corresponds to mode 3 in Table 2, and illustrates that a bypass operation is carried out by making the third, fourth, seventh and eighth switching elements in ON state.

A current may be bypassed along a path of S13→S14→D24→D23 when the current is in a positive direction, which is illustrated in a solid line. Conversely, a current may be bypassed along a path of S23→S24→D14→D13 when the current is in a negative direction, which is illustrated in a dotted line.

As discussed above, the cell controller (24) according to the present disclosure may control ON and/or OFF of the switching elements to carry out a bypass operation not affecting an entire medium voltage inverter through a 0 output voltage, by short-circuiting an output terminal of the inverter unit (23) while a load current is made not to flow to a DC link power of the power cell (20) regardless of current direction.

As shown in the drawing, the NPC/H bridge inverter may use three bypassable switching states thus discussed, such that bypass switching states adequate to positions of faulted switching elements may be set up as in the following Table 3.

[Table 3]

|   | Faulted switching element | Useable bypass modes |
|---|---|---|
| 1 | Fault generated among S13, S14, S23, S24 | Mode 1 |
| 2 | Fault generated among S11, S14, S21, S24 | Mode 2 |
| 3 | Fault generated among S11, S12, S21, S22 | Mode 3 |

That is, as shown above, when any one of the third, fourth, seventh and eighth switching elements (S13, S14, S23, S24) is developed with a fault, the first, second fifth and sixth switching elements (S11, S12, S21, S22) can perform a normal operation, and a bypass operation can be performed using a bypass mode 1, and when any one of the first, fourth, fifth and eighth switching elements (S11, S14, S21, S24) is developed with a fault, the second, third, sixth and seventh switching elements (S12, S13, S22, S23) can perform a normal operation, and a bypass operation can be performed using a bypass mode 2. Furthermore, when any one of the first, second, fifth and sixth switching elements (S11, S12, S21, S22) is developed with a fault, the third, fourth, seventh and eighth switching elements (S13, S14, S23, S24) can perform a normal operation, and a bypass operation can be performed using a bypass mode 3.

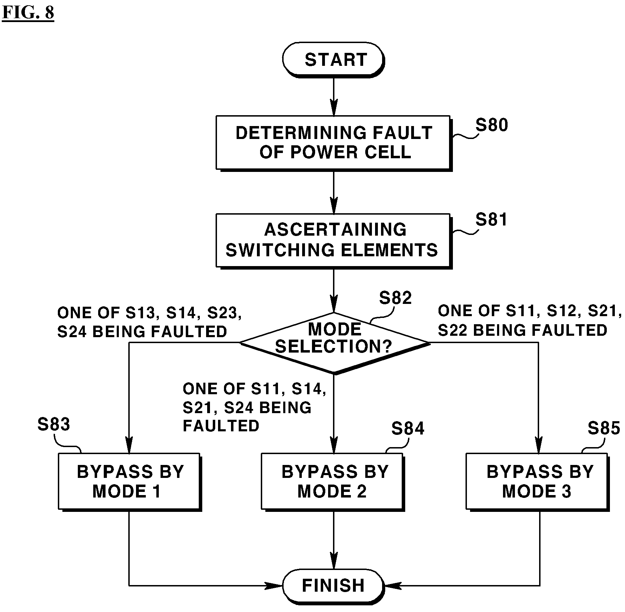

FIG. 8 is a flowchart illustrating to explain the performance of bypass operation by a cell controller of the present disclosure determining a bypass mode.

Referring to FIG. 8, a cell controller (24) may ascertain a state of each switching element in the inverter unit (23) when it is determined that a fault is generated from a power cell (20) (S80), the cell controller (24) may ascertain a state of each switching element in the inverter unit (23)(S81), select a mode in response to the fault of switching element (S82) and carry out a bypass operation (S83 to S85).

That is, the cell controller (24) may perform a bypass operation using a bypass mode 1 when any one of the third, fourth, seventh and eighth switching elements is developed with a fault (S83), the cell controller (24) may perform a bypass operation using a bypass mode 2 when any one of the first, fourth, fifth and eighth switching elements (S11, S14, S21, S24) is developed with a fault (S84), and the cell controller (24) may perform a bypass operation using a bypass mode 3 when any one of first, second, fifth and sixth switching elements (S11, S12, S21, S22) is developed with a fault (S85).

As noted from the foregoing, the present disclosure has an industrial applicability in that switching operations of switching elements in an inverter unit can be controlled to allow a current to bypass, whereby a manufacturing cost can be reduced because of no use of additional switch, when a cell controller (24) determines that a power cell is developed with a fault.

In the above, exemplary embodiments of the present disclosure have been described. However, these embodiments are merely examples and do not limit the present invention, so that persons who skilled in the art of the present disclosure may easily transform and modify within the limit of the technical spirit of the present disclosure. For example, each of the components shown in detail in the embodiments of the present invention may be implemented in transformation. In addition, the differences relating these transformations and modifications shall be regarded to be included in the scope of the present disclosure as defined in the attached claims of the present disclosure and the equivalents thereof.

**Claims**

1. An inverter system forming a phase voltage of a motor by serially connecting a plurality of power cells (20), the power celling (20) including:

   a rectifying unit (21) configured to rectify an applied AC voltage to a DC voltage;
   a DC link capacitor (22);
   an inverter unit (23) including first to fourth switching elements (S11~S14), each serially connected to form a U phase; and fifth to eighth switching elements (S21~S24) serially connected to form a V phase, wherein the switching elements are arranged in an NPC (Neutral Point Clamped)/H bridge by a plurality of diodes (D11~D14, D21~D24) to synthesize a DC link voltage of the DC link capacitor to an AC voltage having a predetermined voltage and frequency by ON or OFF of each of the plurality of switching elements; and
   a controller (24) configured to bypass an output voltage of the inverter unit by controlling the ON or OFF of the plurality of switching elements.

2. The inverter system of claim 1, wherein the controller (24) bypasses an output voltage applied from the DC link capacitor by turning on the first, second, fifth and sixth switching elements (S11, S12, S21, S22).

3. The inverter system of claim 1, wherein the controller (24) bypasses an output voltage applied from the DC link capacitor by turning on the second, third, sixth and seventh switching elements (S12, S13, S22, S23)

4. The inverter system of claim 1, wherein the controller (24) bypasses an output voltage applied from the DC link capacitor by turning on the third, fourth, seventh and eighth switching elements (S12, S13, S23, S24).

5. The inverter system of claim 1, wherein the controller (24) converts some of the plurality of switching elements to ON state in order to carry out a bypass operation in response to a fault-generated switching element by ascertaining a state of the plurality of switching elements when it is determined that a fault is generated on the power cell.

6. The inverter system of claim 5, wherein the controller (24) bypasses an output voltage applied from the DC link capacitor by turning on the first, second, fifth and sixth switching elements S11, S12, S21, S22) when a fault is generated on any one of the third, fourth, seventh and eighth switching elements (S13, S14, S23, S24).

7. The inverter system of claim 5, wherein the controller (24) bypasses an output voltage applied from the DC link capacitor by turning on the second, third, sixth and seventh switching elements (S12, S13, S22, S23) when a fault is generated on any one of the first, fourth, fifth and eighth switching elements (S11, S14, S21, S24).

8. The inverter system of claim 5, wherein the controller (24) bypasses an output voltage applied from the DC link capacitor by turning on the third, fourth, seventh and eighth switching elements (S13, S14, S23, S24) when a fault is generated on any one of the first, second, fifth and sixth switching elements (S11, S12, S21, S22).

**FIG. 1**

**FIG. 2**

**FIG. 3**

FIG. 4

**FIG. 5**

**FIG.6**

**FIG.7**

## FIG. 8

```
                    ┌─────────────┐
                    │    START    │
                    └─────────────┘
                           │
                           ▼
              ┌────────────────────────┐
              │  DETERMINING FAULT     │  S80
              │    OF POWER CELL       │
              └────────────────────────┘
                           │
                           ▼
              ┌────────────────────────┐
              │    ASCERTAINING        │  S81
              │  SWITCHING ELEMENTS    │
              └────────────────────────┘
                           │
                           ▼
                                        S82
   ONE OF S13, S14, S23,   ◇──────────◇   ONE OF S11, S12, S21,
   S24 BEING FAULTED       │   MODE   │   S22 BEING FAULTED
                           │SELECTION?│
                           ◇──────────◇
                                │
                     ONE OF S11, S14,
                     S21, S24 BEING
                     FAULTED
   S83                          │              S85
   ┌───────────┐    ┌───────────────┐    ┌───────────┐
   │ BYPASS BY │    │  BYPASS BY    │    │ BYPASS BY │
   │  MODE 1   │    │   MODE 2      │    │  MODE 3   │
   └───────────┘    └───────────────┘S84 └───────────┘
         │                  │                  │
         │                  ▼                  │
         └────────►┌───────────────┐◄──────────┘
                   │    FINISH     │
                   └───────────────┘
```

Europäisches
Patentamt

European
Patent Office

Office européen
des brevets

**EUROPEAN SEARCH REPORT**

Application Number

EP 16 15 8904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/078797 A1 (MIHALACHE LIVIU [US]) 20 March 2014 (2014-03-20) * paragraph [0054] * ----- | 1-8 | INV. H02M7/487 H02M1/32 H02M7/483 |
| Y | US 2014/085954 A1 (HASEGAWA RYUTA [JP] ET AL) 27 March 2014 (2014-03-27) * paragraphs [0032] - [0034]; tables 1,3 * * paragraphs [0054] - [0060] * ----- | 1-8 | |

TECHNICAL FIELDS
SEARCHED     (IPC)

H02M

The present search report has been drawn up for all claims

| Place of search | Date of completion of the search | Examiner |
|---|---|---|
| The Hague | 7 July 2016 | Gusia, Sorin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................
& : member of the same patent family, corresponding
    document

EPO FORM 1503 03.82 (P04C01)

**EP 3 068 029 A1**

## ANNEX TO THE EUROPEAN SEARCH REPORT
## ON EUROPEAN PATENT APPLICATION NO.

EP 16 15 8904

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2016

| Patent document cited in search report | | | Publication date | Patent family member(s) | | | Publication date |
|---|---|---|---|---|---|---|---|
| US 2014078797 | A1 | | 20-03-2014 | CN | 104769832 | A | 08-07-2015 |
| | | | | EP | 2898597 | A2 | 29-07-2015 |
| | | | | US | 2014078797 | A1 | 20-03-2014 |
| | | | | WO | 2014046986 | A2 | 27-03-2014 |
| US 2014085954 | A1 | | 27-03-2014 | CN | 103314517 | A | 18-09-2013 |
| | | | | EP | 2665173 | A1 | 20-11-2013 |
| | | | | JP | 5734672 | B2 | 17-06-2015 |
| | | | | JP | 2012147559 | A | 02-08-2012 |
| | | | | US | 2014085954 | A1 | 27-03-2014 |
| | | | | WO | 2012096151 | A1 | 19-07-2012 |

EPO FORM P0459

For more details about this annex : see Official Journal of the European Patent Office, No. 12/82